(19) **Europäisches Patentamt**
**European Patent Office**
**Office européen des brevets**

(11) **EP 4 553 139 A1**

(12) **EUROPÄISCHE PATENTANMELDUNG**

(43) Veröffentlichungstag:
**14.05.2025 Patentblatt 2025/20**

(21) Anmeldenummer: **24207097.7**

(22) Anmeldetag: **17.10.2024**

(51) Internationale Patentklassifikation (IPC):
*C12C 7/06* (2006.01)     *C12C 7/22* (2006.01)
*C12C 7/26* (2006.01)     *F28D 20/00* (2006.01)

(52) Gemeinsame Patentklassifikation (CPC):
**C12C 7/06; C12C 7/22; C12C 7/26; F28D 20/0034**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **17.10.2023 DE 102023128382**

(71) Anmelder: **Steinecker GmbH**
**85356 Freising-Attaching (DE)**

(72) Erfinder:
• **Kammerloher, Helmut**
**85356 Freising (DE)**
• **Friedrich, Michael**
**85356 Freising (DE)**

(74) Vertreter: **Grünecker Patent- und Rechtsanwälte PartG mbB**
**Leopoldstraße 4**
**80802 München (DE)**

(54) **MAISCHVORRICHTUNG UND VERFAHREN ZUM ERWÄRMEN VON MAISCHE BEI DER BIERHERSTELLUNG**

(57) Die Erfindung betrifft eine Maischvorrichtung (1) und ein Verfahren zum Erwärmen von Maische (13) bei der Bierherstellung mit einem Behälter (2), einer im Behälter (2) angeordneten Innenheizung (3) zum Beheizen der Maische mit einem Heizmedium (14) wobei die Maischvorrichtung (1) einen externen Wärmetauscher (5) zum Beheizen der Maische mit dem Heizmedium (14) aufweist.

FIG. 2

## Beschreibung

Die Erfindung betrifft eine Maischvorrichtung sowie ein Verfahren zum Erwärmen von Maische bei der Bierherstellung gemäß den Oberbegriffen der Ansprüche 1 und 9.

Ein wichtiger Prozessschritt zur Herstellung von Bier ist das Maischen. Beim Maischen werden die Malzinhaltsstoffe gewonnen. Dabei werden Schrot und Wasser miteinander vermischt, bereits aus dem Malz lösliche Inhaltsstoffe gehen in Lösung, unlösliche Bestandteile werden durch Kochen oder Enzyme in Lösung gebracht. Die wichtigsten Stoffgruppen, die durch Enzyme abgebaut werden sind Stärke und Eiweiß. Da jedes Enzym ein Temperaturoptimum hat wird während des Maischprozesses ein Temperaturprofil durchlaufen, bei welchem bei unterschiedlichen Temperaturen Rasten getätigt werden. Der Maischprozess für einen Sud dauert beispielsweise 90 bis 180 Minuten. Alle in Lösung gehende Stoffe nennt man Extrakt. Dieser wird nach weiteren Prozessschritten vergoren. Da die Maische während des Maischprozesses erwärmt wird weisen Maischvorrichtungen eine Innenheizung auf, insbesondere eine Zargenheizung (oder auch Zargenheizfläche genannt), wobei die Maische über ein Heizmedium erwärmt wird.

Die Rekuperation thermischer Energie und deren Wiedereinsatz im Sudhaus ist von zunehmender Bedeutung. Die Rückgewinnung thermischer Energie, ist durch die Temperaturen der Prozessmedien aus denen Energie rückgewonnen wird und durch die Temperaturen, die bei der Verwendung eines aus rekuperativer Wärmerückgewinnung erwärmten Heizmediums benötigt werden, limitiert. So benötigt man beispielsweise, wenn Energie beim Würzekühler aus Würze rückgewonnen werden soll, einen möglichst kalten Wärmeträger bzw. Heizmedium in einem Temperaturbereich von optimalerweise 75 °C bis 85 °C bei einem geschlossenen Energiespeicherkreislauf, d. h. für die Energierückgewinnung und -wiedereinsatz, wird Wasser in einem Kreislauf verwendet, welches nicht mit dem Zwischen- oder Endprodukt in Berührung kommt. Es ist jedoch auch möglich, dass der Wärmeträger bzw. das Heizmedium viel kälter ist, beispielsweise 2 °C bis 8 °C. Je nach Ausführung des Energiekonzepts, beispielsweise wie bereits erwähnt als geschlossenes System, gibt es auch die Möglichkeit eines offenen Systems, bei welchem das Wasser zur Rekuperation vorzugsweise nach Abgabe zumindest eines Teils der aufgenommenen Energie, als Produktwasser, also beispielhaft zum Einmaischen, Anschwänzen oder als Reinigungswasser oder Ausschub- oder Transferwasser, verwendet wird. Es sind auch Wassertemperaturen für die Rekuperation von 2 °C bis 85 °C, teilweise auch höher, möglich. Das bedeutet, dass unabhängig davon, ob es sich um ein geschlossenes oder offenes System handelt, Temperaturen für die Rekuperation und Aufnahme von Energie von 2 °C bis 85 °C vorgehalten sein können. Ein offenes wie auch ein geschlossenes System kann sowohl atmosphärisch offen wie auch mit Druck beaufschlagt ausgeführt sein. In einem geschlossenen System kann es sich im Gegensatz zu einem offenen System bei dem Wärmeträger auch um ein anderes Medium als Wasser handeln, beispielhaft um Thermoöl.

In Abhängigkeit des Standorts der Brauerei und damit der Meereshöhe kann beispielsweise bei der atmosphärisch offenen Kochung der Würze auf 500 m über NN eine maximale Heizmedium-Vorlauftemperatur aus einem Würzekühler oder Pfannendunstkondensator von 96 °C bis 98 °C erreicht werden. Es können noch höhere Temperaturen z.B. bis zu 110 °C erreicht werden, wenn die Energie z.B.: von einem BHKW stammt. Die Rücklauftemperatur des Heizmediums wird durch die Energiesenke, z.B. einem Läuterwürzeerhitzer oder einer Maischvorrichtung bestimmt (und liegt dann z.B. im Bereich von 77 °C - 85 °C).

Wird Maische mit rekuperativer thermischer Energie aufgeheizt, ergibt sich, um nur einige Einflussfaktoren zu nennen, in Abhängigkeit des Maischevolumens, der spezifischen Gefäß- und Rührergeometrie, der treibenden Kraft (Temperaturdifferenz zwischen Heizmedium und Produkt), dem Wärmedurchgangskoeffizienten, der Wärmeübertragungsfläche, der Schrotart, dem Rezept und dem Maischverfahren, usw., eine bestimmte Heizrate.

Gerade bei rekuperativ beheizten Maischsystemen besteht somit eine Limitierung der erzielbaren Heizraten.

Eine weitere Problematik besteht bei zunehmendem Durchmesser der Maischgefäße, d.h. einem ungünstigen Durchmesser-Höhenverhältnisses bzw. zu kleinem A / V - Verhältnis (Oberflächenzu Volumenverhältnis) des Maischgefäßes. Dabei wird das Verhältnis von Maischevolumen zu verfügbarer Heizfläche immer ungünstiger und damit verschlechtert sich wiederum der erzielbare Wärmestrom und die Heizrate. Soll dennoch eine hohe Heizrate erreicht werden, entfallen damit die hocheffizienten rekuperativen Energiesparsysteme bzw. kommen nicht in Betracht, weil sie diese hohen Heizraten bisher nicht leisten können. Der Problematik der geringeren Heizrate kann zwar in gewissem Maß mit höheren Heizmedium-Volumenströmen entgegentreten werden, damit steigt aber auch die Rücklauftemperatur des Heizmediums aus der Heizfläche. Diese steigende Auslauftemperatur des Heizmediums seinerseits, bedingt jedoch wieder eine geringere Wärmeaufnahmemöglichkeit bei der Rückgewinnung von thermischer Energie aus einem Prozess, beispielsweise der Würzekühlung, wie zuvor beschrieben wurde. Als Ausweg für hohe Heizraten bleibt ein Boostern, das zusätzliche Aufheizen des Heizmediums auf ein höheres Temperaturniveau (z.B. durch Dampf oder Hochdruckheißwasser, also allgemein mit Primärenergie). Damit steigt aber auch wieder die Rücklauftemperatur und es kann in Folge noch weniger Energie rekuperiert und wiederverwendet werden. Bei großen Anlagen mit hohen geforderten Sudzahlen werden aber oft niedrige Heizraten nicht akzeptiert. Somit werden solche Anlagen weiterhin nur mit Primärenergie beheizt was aus umwelttechnischen Gesichtspunkten inakzeptabel und nicht zeitgemäß ist.

Hiervon ausgehend liegt der vorliegenden Erfindung die Aufgabe zugrunde eine Maischvorrichtung sowie ein Verfahren zum Erwärmen von Maische bereitzustellen, die einerseits eine hohe Heizrate und andererseits gleichzeitig eine möglichst niedrige Rücklauftemperatur ermöglichen um Heizmedien, die mit rekuperierter thermischer Energie erwärmt werden, verwenden zu können.

Erfindungsgemäß wird diese Aufgabe durch die Merkmale der Ansprüche 1 und 9 gelöst.

Die erfindungsgemäße Maischvorrichtung zum Erwärmen von Maische bei der Bierherstellung weist einen Behälter auf, eine im Behälter angeordnete Innenheizung zum Beheizen der Maische mit einem Heizmedium. Weiter weist die Maischvorrichtung einen zusätzlichen externen Wärmetauscher zum Beheizen der Maische mit dem Heizmedium auf. Somit kann die zuvor beschriebene Problematik durch eine zusätzliche Heizfläche außerhalb der Maischvorrichtung gelöst werden. Durch den zusätzlichen externen Wärmetauscher ist es möglich einerseits die Heizrate zu erhöhen, wobei andrerseits gleichzeitig die Rücklauftemperatur niedrig gehalten werden kann, derart, dass das abgekühlte Heizmedium beispielsweise wiederverwendet werden kann um z.B. Wärmeenergie aus einem abzukühlenden Produkt z.B. im Sudhausprozess, insbesondere aus der heißen Würze auszukoppeln. Es muss nicht immer ein Produkt im Sudhausprozess sein, das durch das Heizmedium gekühlt wird. Möglich ist beispielsweise auch der Einsatz des rücklaufenden Heizmediums in Verbindung mit einer Wärmepumpe, an einer Kälteanlage oder einer Wärmepumpe zur Rückgewinnung von Abwärme beispielsweise aus Abwasser oder Kompressoren (z.B. einer Druckluftanlage), Wärmepumpen im Allgemeinen, Fernwärme, einem BHKW (Blockheizkraftwerk) oder auch einer Anlage für Solarthermie oder Geothermie. Auch außerhalb einer Brauerei regenerativ gewonnene Energie kann eingesetzt werden, beispielhaft gilt dies neben Biogas auch für regenerativ gewonnene Abwärme anderer Industrien.

Ein entsprechender externer Wärmetauscher kann einfach und kostengünstig nachgerüstet werden. Gerade bei einer großen Maischemenge innerhalb eines Sudes können so höhere Heizraten erzielt werden und/oder die tägliche Sudanzahl gehalten oder sogar erhöht werden.

Unter Innenheizung versteht man z.B. eine Boden-und/oder Zargenheizung, und/oder andere innerhalb des Gefäßes angebrachte Wärmeübertrager, wie etwa einen Innenring etc., die dann z.B. jeweils entweder parallel oder in Reihe zueinander verschaltet sein können.

Es ergeben sich insbesondere Vorteile bei Nachrüstungen, die Umbaumaßnahmen am Maischgefäß können niedrig gehalten werden. Zudem kann eine Primärenergieeinsparung insbesondere bei großen Maischsystemen erreicht werden. Auch sehr große Anlagen bzw. Maischvorrichtungen können nun ausschließlich mit rekuperativer Energie oder aber Energie aus erneuerbaren Quellen und mit einem niedrigen Temperaturniveau des Heizmediums effizient beheizt werden. Unter niedrigem Temperaturniveau des Heizmediums ist bevorzugt eine Temperatur von <= 110 °C, weiter bevorzugt <= 105 °C, noch weiter bevorzugt <= 98 °C, am bevorzugtesten <= 96 °C zu verstehen.

Der externe Wärmetauscher kann dabei parallel oder in Reihe zu der Innenheizung geschalten sein.

In Reihe geschaltet kann bedeuten, dass der externe Wärmetauscher der in dem Behälter integrierten Innenheizung vorgeschaltet und/oder nachgeschaltet sein kann. Die Begrifflichkeiten "parallel" und "in Reihe" geschalten beziehen sich auf die Verschaltung der Heizeinrichtungen zueinander in Bezug auf das Heizmedium. "In Reihe" bedeutet dabei, dass der Rücklauf einer ersten Heizeinrichtung gleichzeitig der Vorlauf einer zweiten Heizeinrichtung ist. Analog bedeutet "parallel", dass die Heizeinrichtungen aus demselben Vorlauf mit der gleichen Temperatur angefahren werden.

Vorzugsweise ist in Bezug auf das Heizmedium der externe Wärmetauscher in Reihe zu der Innenheizung geschaltet.

Je nach Anwendung oder Prozess kann eine serielle oder parallele Anordnung verwendet werden. Dabei ist die Reihenschaltung aus folgenden Gründen zu bevorzugen:
Die Rücklauftemperatur des Heizmediums ist geringer, der NTU Wert wird höher, eine zusätzliche Regelung kann entfallen, es ist kein doppelter Heizvolumenstrom notwendig.

Der Behälter weist gemäß einer bevorzugten Ausführungsform einen Auslass, insbesondere einen unteren Auslass auf, der bevorzugt auch der Auslass für das Abmaischen ist, über den die Maische dem externen Wärmetauscher zugeführt werden kann, sowie einen Einlass, insbesondere einen tangentialen Einlass über den die im externen Wärmetauscher erwärmte Maische dem Behälter wieder zurückgeführt werden kann. Somit kann ein Teil der Maische, welche für einen Sud benötigt wird, zwischen Behälter und externen Wärmetauscher zirkulieren, sodass auch ein Rührer in der Maischvorrichtung langsamer im Vergleich zu herkömmlichen Maischvorrichtungen laufen kann bzw. entlastet wird.

Die tangentiale Rückführung der Maische vom externen Wärmetauscher in einen oberen Bereich des Behälters, insbesondere einem über der Rühreinrichtung und unterhalb des Maischespiegels liegenden Bereichs des Behälters, ist besonders vorteilhaft. Hierdurch ist die Grenzschichtgeschwindigkeit und damit der Wärmeübergang an der Innenheizung, insbesondere der Zargenheizfläche des Behälters, insbesondere in einem weiter vom Rührer entfernten Bereich stark erhöht. Dies führt zu einem höheren Wärmestrom, einer deutlich niedrigeren Gesamt- Rücklauftemperatur aus den Zargenheizflächen und ermöglicht somit im Umkehrschluss eine höhere Rekuperationsrate, beispielsweise am Würzekühler bei gleichzeitigen Auslegungsvorteilen. Es kann somit ein Heizmedium niedrigen Temperaturniveaus effizient für die Beheizung der Maische bei gleichzeitig höherer erzielbarer Heizrate eingesetzt werden.

Mit der tangentialen Rückführung in einen oberen Bereich des Behälters ergibt sich noch ein weiterer entscheidender Vorteil. Man kann damit die Gefäße schlanker und höher und damit sehr viel kostengünstiger ausführen, da die Rückführung in einen oberen Bereich des Behälters eine verbesserte Durchmischung und auch Rotation der Maische innerhalb des Behälters ermöglicht bzw. erzwingt. Somit kann die tangentiale Maischerückführung auch zu einer reduzierten Rührwerksauslegung führen bei gleichzeitig zumindest gleichwertigem oder besserem Wärmeübergang.

Gemäß einer bevorzugten Ausführungsform ist die Maischvorrichtung mit einem Energiespeichertank verbunden. Aus dem Energiespeichertank wird das Heizmedium der Innenheizung und dem externen Wärmetauscher über Zuführleitungen zugeführt und abgekühltes Heizmedium kann über Rückführleitungen in den Energiespeichertank zurückgeführt werden.

Das abgekühlte Heizmedium kann nun vorzugsweise mit rekuperativer Energie aus einem anderen Prozessschritt oder Solarthermie aber auch mit Hilfe anderer thermischer Energiequellen wieder erwärmt werden. Somit kann die Erwärmung der Maische bevorzugt mittels rekuperativ gewonnener Energie auf niedrigem Temperaturniveau und gleichzeitig höheren Heizraten als herkömmlich realisiert werden. Ein wichtiger Nebeneffekt, wie beschrieben, ist dabei die niedrige Rücklauftemperatur aus den Heizeinrichtungen, wodurch die Rekuperationsrate von Energie aus anderen Prozessschritten oder anderen Prozessen bezogen auf das Maischevolumen und die Heizrate verbessert werden kann und auch die Möglichkeit des Einsatzes des Heizmediums mit niedrigerem Temperaturniveau als herkömmlich, bedingt durch die vergrößerte Heizfläche / Wärmeübertragungsfläche.

Gemäß einer bevorzugten Ausführungsform ist der Energiespeichertank mit einem weiteren Wärmetauscher verbunden, über den Heizmedium aus dem Energiespeichertank erwärmt und erneut dem Energiespeichertank in einem darüber liegenden Bereich zurückgeführt werden kann, wobei im weiteren Wärmetauscher z.B. ein abzukühlendes Produkt das Heizmedium erwärmen kann und wobei der weitere Wärmetauscher vorzugsweise ein Würzekühler ist. Das bedeutet, dass dadurch, dass der zusätzliche externe Wärmetauscher zum Einsatz kommt die Rücklauftemperatur des Heizmediums so niedrig ist, dass das Heizmedium bzw. der Wärmeträger geeignet ist Würze zu kühlen um eine große Wärmemenge aus der Würze auszukoppeln, die dann zum Erwärmen der Maische wiederverwendet werden kann. Insbesondere kann das Heizmedium, das in der Innenheizung und dem externen Wärmetauscher abgekühlt ist, zu dem heißen Heizmedium zugemischt werden, insbesondere kann es in eine Zulaufleitung beigemischt werden.

Die Maischvorrichtung kann auch mit einem ersten Tank, insbesondere Heißwassertank, verbunden sein, aus dem das Heizmedium der Innenheizung und dem externen Wärmetauscher über Zuführleitungen zugeführt werden kann und vorzugsweise abgekühltes Heizmedium über Rückführleitungen in einen zweiten Tank, insbesondere Warmwassertank, zurückgeführt werden kann. Der zweite Tank kann mit mindestens einem weiteren Wärmetauscher verbunden sein, über den Heizmedium aus dem zweiten Tank erwärmt und erneut dem ersten oder zweiten Tank zugeführt werden kann, wobei der mindestens eine weitere Wärmetauscher seine Energie aus den zuvor erwähnten Quellen entnimmt. Der mindestens eine weitere Wärmetauscher kann auch mit einem Kaltwassertank verbunden sein und das erwärmte Wasser kann dem ersten Tank oder dem zweiten Tank zugeführt werden. Alternativ kann der erste und zweite Tank sowie bevorzugt ein Kaltwassertank in Form eines einzigen Tanks, eines sogenannten Verdrängungsspeichers, ausgeführt sein. Ein Verdrängungsspeicher ist eine Art Schichtspeicher mit mehreren Ein- und Auslässen auf verschiedenen Temperaturniveaus, allerdings in einem offenen System. Ein Verdrängungsspeicher wird im Gegensatz zu einem Energiespeicher mit Wasser betrieben, welches mit unterschiedlichem Temperaturniveau Wasserverbrauchern (z.B.: Maischwasser, Anschwänzwasser, Reinigungswasser) zugeführt werden kann. Das Wasser verlässt dann das System und wird gleichzeitig durch Frischwasser ersetzt. Bei einem Energiespeicher fungiert das Medium lediglich als Wärmeträger.

Durch die Auslegung des Systems mit einem zusätzlichen externen Wärmetauscher ergibt sich weiterhin ein höherer NTU-Wert als bei herkömmlichen Maischeinrichtungen. Weiterhin kann die Temperaturführung des Heizmediums immer der Produkttemperatur folgen. D.h. die Erhöhung der Vorlauftemperatur des Heizmediums kann weitestgehend parallel zur Erhöhung der Produkttemperatur der Maische, jedoch auf höherem Temperaturniveau und in Abhängigkeit der zu erzielenden Heizrate erfolgen. Die Erhöhung der Rücklauftemperatur aus den Heizeinrichtungen (d.h. Innenheizung und zusätzlicher Wärmetauscher) verhält sich analog zu der Erhöhung der Vorlauftemperatur oder Maischetemperatur. Durch die Steuerung der Vorlauftemperatur des Heizmediums in Abhängigkeit der Maischetemperatur und der zu erzielenden Heizrate des Heizsystems kann eine eigens geregelte Vorlauftemperatur einer zweiten Heizeinrichtung obsolet sein. Durch den nun möglichen Einsatz niedriger Heizmediumtemperaturen wird ein Anbrennen der Maische somit auch verhindert oder zumindest weitgehend reduziert. Der Einsatz eines Boosters kann ebenfalls entfallen, was die Gefahr eines Anbrennens der Maische nochmals reduziert. Durch Beimischen des abgekühlten Heizmediums kann insbesondere die Temperaturdifferenz, wie oben beschrieben, zwischen Vorlauftemperatur des Heizmediums und der Produkttemperatur (Maischetemperatur) über den gesamten Aufheizprozess im Wesentlichen konstant gehalten werden, insbesondere die logarithmische Temperaturdifferenz im Wesentlichen konstant gehalten werden. Wobei hier im Wesentlichen konstant bedeutet, dass der sich aus der angestrebten Heizrate ergebende bzw. benötigte Wärmestrom auf gleichem Niveau und die Temperaturerhöhung im Vorlauf des Heizmediums im Wesentlichen gleichmäßig gehalten wird. Der Rücklauf verhält sich analog dazu.

Es ist besonders vorteilhaft, wenn die nach innen gewandte Heizfläche der Innenheizung, zum Beispiel die Innenfläche einer Zargenheizung, eine Vielzahl zum Produkt gerichtete Unebenheiten aufweist, insbesondere eine Vielzahl von nebeneinander und übereinander angeordneten gewölbten Taschen die miteinander in Verbindung stehen und durch die das Heizmedium fließen kann. Der Einsatz solcher Wärmetauscheroberflächen kann den NTU-Wert noch weiter erhöhen.

Vorteilhafterweise liegt der NTU-Wert der Innenheizung und des externen Wärmetauschers im Gesamtsystem bei einem Wert größer als 1, insbesondere in einem Bereich von 1 bis 3. Wie bereits zuvor ausgeführt liegt der Vorteil eines hohen NTU-Wertes darin, dass eine sehr viel niedrigere Rücklauftemperatur realisiert werden kann, die zum Rekuperieren von thermischer Energie aus Wärmequellen sehr wichtig ist. Die Rücklauftemperatur nähert sich im Laufe der Heizphase bei einem hohen NTU-Wert immer weiter der Produkttemperatur an, das heißt der Maischetemperatur. Dieser Punkt ist insbesondere beim Einsatz rekuperativer Energien sehr wichtig.

Bei dem erfindungsgemäßen Verfahren zum Maischen insbesondere mit einer Vorrichtung nach mindestens einem der Ansprüche 1 bis 8 wird zunächst ein Sud in einen Behälter der Maischvorrichtung eingelagert (damit kann das Einmaischen verstanden werden, d.h. Schrot und Wasser wird in der Maischvorrichtung vermischt oder die Vermischung erfolgt bereits vorher und die Maische wird der Maischvorrichtung zugeführt) und in diesem Behälter über eine Innenheizung aufgeheizt, wobei die Maische auch aus dem Behälter in einen externen Wärmetauscher geleitet, dort erwärmt und in die Maischvorrichtung zurückgeführt werden kann.

Gemäß einer bevorzugten Ausführungsform liegt die mittlere Heizrate zum Aufheizen der Maische in einem Bereich von 0,5 bis 1,5 K/min und die mittlere Rücklauftemperatur $T_R$ des Heizmediums nach Erwärmen der Maische in einem Bereich von 70 °C bis 85 °C. Dabei kann die mittlere Vorlauftemperatur $T_v$ des Heizmediums vor Erwärmen der Maische in einem Bereich von 65 °C bis 110 °C, vorzugsweise in einem niedrigen Temperaturbereich von 65 °C - 98 °C, liegen. Die entsprechend niedrigen Rücklauftemperaturen bei gleichzeitig hohen Heizraten werden durch den zusätzlichen externen Wärmetauscher ermöglicht und dem damit einhergehenden höheren NTU-Wert größer 1.

"Mittlere Vorlauftemperatur" bzw. "mittlere Rücklauftemperatur", bezieht sich jeweils auf die mittlere Temperatur während eines Maischprozesses eines Suds, d.h. während der Aufheizphasen und auch während der Rasten.

"Mittlere Heizrate" bezieht sich auf die mittlere Heizrate aller Aufheizphasen eines Suds (ausschließlich der Rasten, bei denen die Temperatur nur gehalten wird und die Heizrate Null ist).

Wie zuvor beschrieben kann durch Beimischen des abgekühlten zurücklaufenden Heizmediums in das heiße Heizmedium die logarithmische Temperaturdifferenz an der Innenheizung und dem externen Wärmetauscher während des Maischprozesses im Wesentlichen jeweils konstant gehalten werden.

Die Temperaturdifferenz zwischen der Vorlauftemperatur ($T_v$) des Heizmediums, (d.h. bei Eintritt in die erste Heizung also entweder in die Innenheizung oder den externen Wärmtauscher) und der Produkttemperatur ($T_p$) ist vorzugsweise während der Heizphase im Wesentlichen konstant (liegt z.B. +/- 10 bis 30 K.).

Gemäß einem bevorzugten Ausführungsbeispiel wird das Heizmedium mit thermischer Energie aus einer rekuperativen Wärmerückgewinnung aufgeheizt, insbesondere durch mindestens einen Würzekühler, d.h., das Heizmedium kann über einen oder mehrere Würzekühler erwärmt werden und optional zusätzlich über andere Wärmequellen.

Das Heizmedium kann zum Erwärmen der Maische über mindestens eine der folgenden Energiequellen aufgeheizt werden: Würzekühler, Blockheizkraftwerk, Wärmepumpe, Pfannendunstkondensator.

Wenn die Rede von Heizrate ist, dann ist darunter die Gesamtheizrate zu verstehen, welche durch eine oder mehrere, Innenheizungen und externe Wärmetauscher in ihrer Gesamtheit und in Bezug auf die Maische erzielt wird bzw. werden soll.

Die vorliegende Erfindung wird nachfolgend unter Bezugnahme der folgenden Figuren näher erläutert.

Figur 1 zeigt eine Ausführungsform einer Maischvorrichtung gemäß einem ersten Ausführungsbeispiel.

Figur 2 zeigt eine Maischvorrichtung zum Erwärmen von Maische gemäß einem zweiten Ausführungsbeispiel.

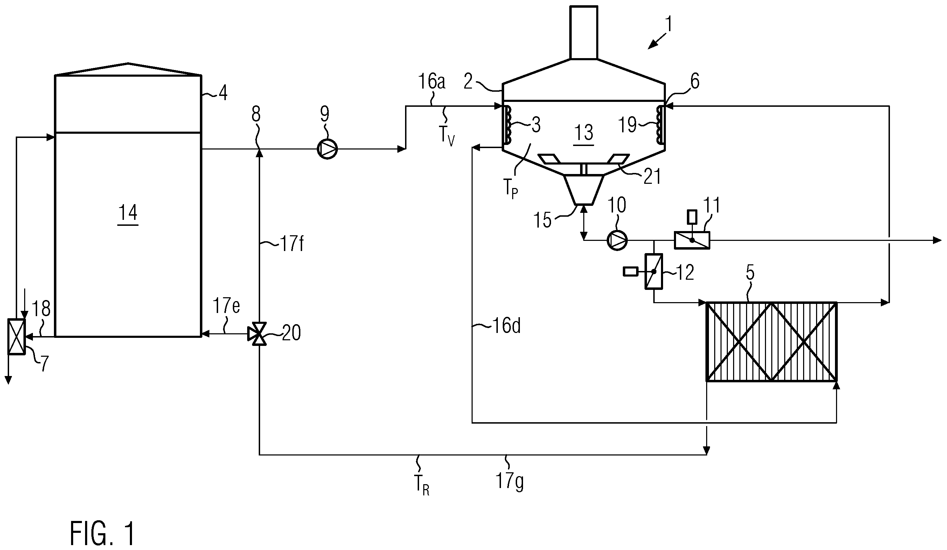

Figur 1 zeigt eine Maischvorrichtung 1 mit einem Behälter 2. Das in der Figur 1 gezeigte Ausführungsbeispiel zeigt eine in Reihe geschaltete Innenheizung 3 mit externen Wärmetauscher 5. Die Maischvorrichtung 1 kann beispielsweise in Form eines Maischbottichs, einer Maischpfanne beziehungsweise Rohrfruchtkochers ausgebildet sein. Die Maischvorrichtung 1 weist eine im Behälter 2 angeordnete Innenheizung 3 beispielsweise in Form einer Zargenheizung auf um die in dem Behälter 2 eingelagerte Maische zu Erwärmen. Auch wenn nicht dargestellt so kann alternativ oder zusätzlich zur Zargenheizfläche auch eine Bodenheizfläche angeordnet sein. Möglich sind auch zusätzlich eingebaute Heizflächen innerhalb des Gefäßes, also welche sich nicht an der Wandung oder am Boden des Gefäßes befinden. Diese sind jedoch in der Regel und aufgrund der schlechten Reinigbarkeit zu vermeiden. Die nach innen gewandte Heizfläche 19 der Innenheizung 3 kann eine Vielzahl von Unebenheiten aufweisen, insbesondere eine Vielzahl von nebeneinander und übereinander gewölbten Taschen, die miteinander in Verbindung stehen und durch die das Heizmedium 14 fließt. Zusätzlich zu dieser Innenheizung 3 ist gemäß dem ersten Ausführungsbeispiel in Reihe ein externer Wärmetauscher 5 (zusätzliche Heizfläche außerhalb der Maischvorrichtung) angeordnet. Dazu weist die Maischvorrichtung bzw. der Behälter 2 einen Auslass 15 zum Beispiel den unteren Auslass 15 auf, über den die Maische 13 dem externen Wärmetauscher 5 zugeführt wird, wobei die Maische 13 in dem Wärmetauscher 5 erwärmt werden kann bevor sie in den Behälter 2 zurückgeführt wird, insbesondere über den tangentialen Maischeinlass 6. Der tangentiale Maischeinlass 6 kann auch zum Einlagern der Maische in den Behälter 2 verwendet werden. Es ist aber auch möglich, dass ein anderer Einlass (nicht dargestellt) zum Einlagern der Maische welche für einen Sud benötigt wird, vorgesehen ist (zum Beispiel der Auslass 15). Der Auslass 15 dient bevorzugt auch zum Ableiten der Maische zum Beispiel zur Läuterung (Fest-/Flüssig-Trennung beispielhaft in einem Läuterbottich oder Maischefilter). Hierzu sind die Stellventile bzw. Regelventile bevorzugt Klappen 11 und 12 vorgesehen, über die der Volumenstrom zum externen Wärmetauscher 5 und oder zum Ableiten der Maische zur Läuterung einstellbar ist. Ferner ist eine Pumpe 10 vorgesehen zum Pumpen der Maische zum externen Wärmetauscher 5, bevorzugt wird Pumpe 10 auch für den Transfer ("Abmaischen") der Maische zu einer Läuterung verwendet.

Die Maischvorrichtung 1 ist mit einem Energiespeichertank 4 über die Leitung 16a verbunden, die Heizmedium 14 aus dem Energiespeichertank 4 der Innenheizung 3 zuführen kann. Dazu ist weiter eine Pumpe 9 vorgesehen. Nachdem das Heizmedium 14 die Innenheizung 3 passiert hat und dabei die Maische 13 aufgewärmt hat tritt das Heizmedium 14 über die Leitung 16d in den in Reihe angeordneten externen Wärmetauscher 5, zum Beispiel einen Plattenwärmetauscher welcher insbesondere als Gegenstromwärmetauscher ausgeprägt ist und erwärmt dabei die Maische 13. Anstelle eines Plattenwärmetauschers kann auch ein Rohrbündelwärmetauscher verwendet werden. Das abgekühlte Heizmedium 14 verlässt dann den externen Wärmetauscher 5 über die Leitung 17g und kann zumindest teilweise in den unteren Bereich des Energiespeichertanks 4 beispielsweise über das Ventil 20 und Leitung 17e rückgeführt werden und /oder über die Leitung 17f dem heißen Heizmedium 14 am Punkt 8 in die Zuführleitung 16a zumindest teilweise beigemischt werden. Dabei kann die Pumpe 9 das Heizmedium 14 wieder in Richtung Innenheizung 3 fördern. Alternativ (nicht dargestellt) kann eine Beimischung am Punkt 8 in das Heizmedium 14 auch durch den Einsatz von Ventilen in der Leitung 17f sowie in der Leitung 16a vor dem Punkt 8 erfolgen.

An dem Energiespeichertank 4 ist z.B. ein weiterer Wämetauscher 7 z.B. mittels Leitung 18 angeschlossen, beispielsweise ein Würzekühler über den kaltes Heizmedium 14 erwärmt werden kann und wobei beispielsweise Würze gekühlt werden kann.

Denkbar ist aber auch jegliche andere Energiequelle, die das erforderliche und im Energiespeicher im oberen Bereich vorherrschende Temperaturniveau und/oder das für die Maischeerwärmung notwendige Temperaturniveau aufweist. Das heiße Heizmedium kann dann in einen oberen Bereich des Energiespeichertanks 4 rückgeführt werden. Allgemein können Energiequellen neben einem Würzekühler und/oder einem Pfannendunstkondensator auch jegliche anderen Abwärmequellen einer Brauerei (beispielhaft Abwärme aus Abwasser, Abwärme einer Kälteanlage oder einer Drucklufterzeugungsanlage), Fernwärme, ein Blockheizkraftwerk, Solarthermie und nicht zuletzt Geothermie, sein. Auch außerhalb einer Brauerei regenerativ gewonnene Energie kann eingesetzt werden, beispielhaft gilt dies neben Biogas auch für regenerativ gewonnene Abwärme anderer Industrien. Weiterhin kann es gerade bei der Nutzung regenerativer Energien sinnvoll sein das Temperaturniveau der Abwärme mittels einer Wärmepumpe auf das erforderliche Niveau anzuheben und nutzbar zu machen. Vorteilhaft ist die niedrige Rücklauftemperatur des Heizmediums für die regenerative Gewinnung von Abwärme und den Einsatz einer Wärmepumpe.

Dadurch, dass die Maische 13 durch den externen Wärmetauscher 5 mittels der Pumpe 10 zirkulieren kann, kann der Rührer 21 im Behälter 2 langsamer laufen als im Vergleich zu Vorrichtungen, die keinen externen Wärmetauscher aufweisen. Die Rückführung der Maische über den Einlauf 6 führt zu einer besseren Durchmischung der Maische im oberen Bereich des Behälters 2 und gleichzeitig zu einem besseren Wärmeübergang an der entsprechenden Heizfläche und des Weiteren zu einer möglichen Energieeinsparung an einem Rührwerk 21.

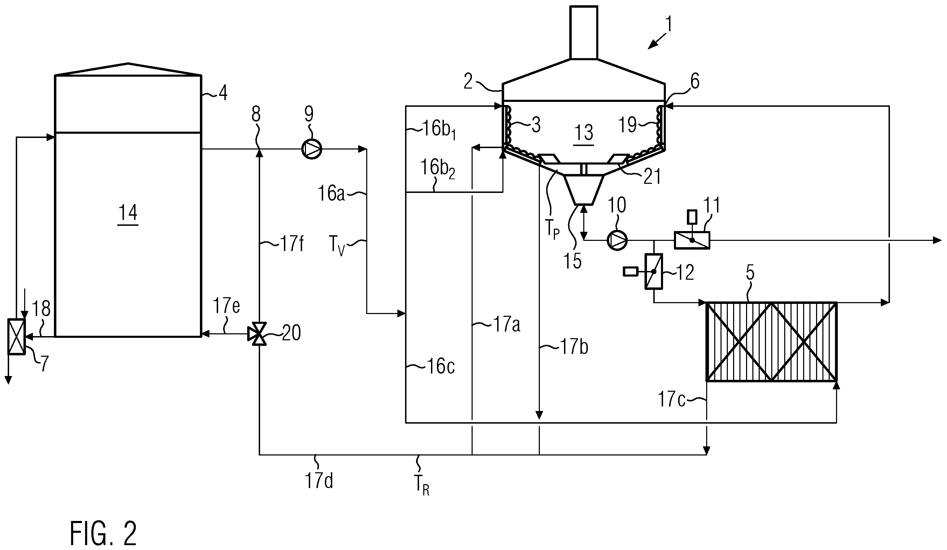

Figur 2 zeigt ein zweites Ausführungsbeispiel, das dem ersten Ausführungsbeispiel entspricht, wobei hier jedoch der externe Wärmetauscher 5 parallel zu der Innenheizung 3 angeordnet ist. Ein weiterer Unterschied liegt darin, dass die Innenheizung zweiteilig ausgebildet ist, hier eine Zargenheizfläche und eine Bodenheizung aufweist, wobei die Zargenheizfläche in mehrere Bereiche aufgeteilt sein kann (hier nicht dargestellt). Auch wenn dies in dem ersten Ausführungsbeispiel nicht dargestellt ist kann auch das in der Figur 1 abgebildete Ausführungsbeispiel eine zusätzliche Bodenheizung und / oder mehrere Zargenheizflächen aufweisen.

In der Figur 2 gelangt das heiße Heizmedium 14 über die Leitung 16a und $16b_1$ zu der Zargenheizung und über die Leitung $16b_2$ zu der Bodenheizung, die beide Teil der Innenheizung 3 sind. Über die parallel angeordnete Leitung 16c gelangt das heiße Heizmedium 14 von der Leitung 16a in den externen Wärmetauscher 5, der wie zuvor beschrieben die zirkulierende Maische 13 zusätzlich zur Innenheizung 3 erwärmt. Über die Leitungen 17a, 17b und 17c gelangt das abgekühlte Heizmedium 14 über die Leitungsabschnitte 17d und 17e in den unteren Teil des Energiespeichertanks 4 und/ oder wird über die Leitungsabschnitte 17d und 17f in der Leitung 16a dem heißen Heizmedium 14 am Punkt 8 zugemischt.

Auch wenn hier nicht dargestellt, so kann es sein, dass die Heizeinrichtungen der Innenheizung 3 (also die Zargenheizung und Bodenheizung) parallel mit dem Heizmedium 14 angefahren bzw. angeströmt werden und danach in Reihe mit einem externen Wärmetauscher 5 verbunden sind. Es ist auch möglich alle Heizeinrichtungen der Innenheizung 3 sowie der der externe Wärmetauscher 5 in Reihe mit dem Heizmedium 14 zu verschalten und anzufahren. Auch andere Kombinationen sind denkbar.

Besonders hervorzuheben ist die Reihenschaltung gegenüber einer Parallelschaltung. Es ergeben sich dabei z.B. folgende Vorteile:

- Rücklauftemperatur Heizmedium wird geringer
- NTU wird höher
- Zusätzliche Regelung des Volumenstroms entfällt
- Der Volumenstrom des Heizmediums ist niedriger

Durch den zusätzlichen externen Wärmetauscher 5 ist es möglich das Produkt, das heißt die Maische, mit rekuperativ gewonnenem Heizmedium 14 in großer thermischer Menge (bei großem NTU-Wert) besonders schonend aufzuheizen und eine möglichst niedrige Rücklauftemperatur (zum Energiespeicher) zu gewährleisten. Insbesondere kann für die beiden Wärmetauscher (Innenheizung 3 (Zargen-und/oder Bodenheizfläche) und externer Wärmetauscher 5) ein NTU-Wert über 1,0, insbesondere bis zu 3 erzielt werden.

Die Number of Transfer Units (NTU) ist eine allgemein bekannte dimensionslose Kennzahl aus dem Bereich der Wärmeübertragung.

Der Nutzen der NTU besteht darin, einen Wärmeübertrager auszulegen oder ein vorhandenes System zur Wärmeübertragung nachzurechnen. Das NTU-Verfahren vereinfacht den Auslegungs- bzw. Nachrechnungsprozess erheblich, da es bei komplizierteren Strömungsformen schwierige Berechnungen erspart.

Herleiten lässt sich NTU, in dem man zunächst für den übertragenen Wärmestrom die Formel für das Fluid (mit: Massenstrom ṁ, Wärmekapazität $c_p$, Temperaturdifferenz $\Delta T$) sowie die Formel für die Übertragungsfläche (mit: Wärmedurchgangskoeffizient k, Übertragungsfläche A, logarithmische Temperaturdifferenz $\Delta\vartheta$)

notiert, die nach der Energieerhaltung beide gleich sein müssen:

$$\dot{Q} = \dot{m} \cdot c_p \cdot \Delta T = k \cdot A \cdot \Delta\vartheta$$

Nun formt man diese Gleichung in das Verhältnis von Temperaturdifferenz und logarithmischer Temperaturdifferenz um, da letztere bei Wärmeübertragern die nicht dem Gleich- oder Gegenstromprinzip folgen, schwer zu bestimmen ist:

$$NTU = \frac{k \cdot A}{\dot{m} \cdot c_p} = \frac{\Delta T}{\Delta\vartheta}$$

$\Delta T$ =Differenz aus Vorlauf- und Rücklauftemperatur des Heizmediums des zu betrachtenden Wärmeübertragungssystems
$\Delta\vartheta$ = log. Temperaturdifferenz des Heizmediums und des aufzuheizenden Produkts des zu betrachtenden Wärmeübertragungssystems

Die vorliegende Erfindung wird nachfolgend unter Vergleich mit einer konventionellen rekuperativen Maischeaufheizung näher erläutert. Beispiel 1 betrifft ein herkömmliches Maischeaufheizverfahren.

**Beispiel 1:** Konventionelle, rekuperative Maischeaufheizung

Sudhaus: 1100 hl Kaltwürze / 17.5 °Plato

Erforderliche Maischemenge: 840 hl

Gefäßdurchmesser: 6000 mm

Max. Heizfläche bis Höhe Maischespiegel: ~69 m$^2$

**Mittlere Heizrate : 0,40 K/min**

**Mittlere Heizmediumaustrittstemperatur Heizfläche (mittlere Rücklauftemp.$T_R$): ca. 82 °C** Beheizung zu 100% mit rekuperativer Energie.

Im ersten Beispiel wird sehr deutlich herausgestellt, dass bei sehr großen Maischgefäßen und hohen Maischekonzentrationen, nur eine wenig akzeptierte Heizrate von z.B. 0,4 K/min erreicht werden kann. Damit würde dieses rekuperative System nicht zum Einsatz kommen und die komplette Maische würde mit Primärenergie beheizt werden. Das wären bei 3000 Suden pro Jahr eine Wärmeenergiemenge von über 12 Mio. kWh/a (Primärenergie) und ein zusätzlicher $CO_2$ Eintrag in die Atmosphäre von etwa 2600 Tonnen pro Jahr.

Das zweite Beispiel gemäß der vorliegenden Erfindung zeigt eine rekuperative Maischeaufheizung mit externen Wärmetauscher 5.

**Beispiel 2:** rekuperative Maischeaufheizung mit externem Wärmetauscher wie z.B. in Fig. 1 mit Reihenschaltung gezeigt

Sudhaus: 1100 hl Kaltwürze / 17.5 °Plato

Erforderliche Maischemenge: 840 hl

Gefäßdurchmesser: 6000 mm

Max. Heizfläche bis Höhe Maischespiegel: ~69 m$^2$

Zusätzliche Heizfläche Wärmetauscher: ~ 60 m$^2$

**Mittlere Heizrate : 0,80 K/min**

**Mittlere Heizmediumaustrittstemperatur Heizfläche (mittlere Rücklauftemp.$T_R$): ca. 79 °C**

Beheizung zu 100% mit rekuperativer Energie.

Im Beispiel 2 mit hocheffizienten Pillow Plate Heizflächen d. h. mit zum Produkt gerichtete Unebenheiten an der Innenheizung 19 und einem externen Wärmetauscher 5 erreicht man hingegen mehrere Vorteile:

- Die Heizrate ist bei gleicher Vorlaufemperatur fast doppelt so hoch wie im ersten Beispiel
- und trotzdem ist die Rücklauftemperatur des Heizmediums sehr viel niedriger als zuvor.
- Erst mit einer solch niedrigen Rücklauftemperatur lässt sich die maximale Wärmemenge beispielsweise am Würzekühler rekuperieren
- und man benötigt damit auch sehr viel weniger Energiespeichervolumen (das heißt der Energiespeichertank kann kleiner ausgelegt werden).
- Ein Maischsystem das nicht mit fossiler Energie beheizt wird, verursacht neben der sehr hohen Energieeinsparung auch enorme Vorteile im Kesselhaus, das mit einem sehr viel kleineren Heizkessel und Versorgungsleitungen (Leitungsdurchmesser wird kleiner) ausgerüstet werden kann.
- Bestehende Anlagen können leicht nachgerüstet werden und somit ebenfalls zumindest teilweise mit rekuperierter Energie betrieben werden, was wiederum ein Kesselhaus entlasten und zu Einsparungen an zumindest thermischer Primärenergie führen kann.

Das Beispiel 2 eröffnet also nun die Möglichkeit auch bei derart großen Anlagen mit Niedertemperatur und / oder rekuperativer Energie die Maische zu beheizen.

Nachfolgend wird das erfindungsgemäße Verfahren unter Bezugnahme der Figur 1 und 2 näher erläutert. Zunächst wird zu Beginn des Maischeprozesses Maische in den Behälter 2 eingelagert, entweder über den tangentialen Maischeeinlass 6, oder den Auslass 15 oder aber über einen anderen Maischeinlass (nicht dargestellt). Alternativ verfügt der Behälter 2 im oberen Bereich über einen sogenannten Vormaischer bei welchem Wasser und Schrot vermischt werden (nicht dargestellt). Die Maische 13 wird über eine Innenheizung 3 aufgeheizt, wobei ein Wärmeträger 14 aus dem Energiespeichertank 4 der Innenheizung 3 zugeleitet wird. Die Maische 13 kann in dem Behälter 2 über einen Rührer 21 gerührt werden. Während des Maischprozesses wird über einen Ablauf hier den unteren Ablauf 15 und die Pumpe 10 Maische abgepumpt und über das geöffnete Ventil 12 und das geschlossene Ventil 11 dem externen Wärmetauscher 5 zugeleitet und im Kreislauf über den tangentialen Maischeinlass 6 in den Behälter 2 rückgeführt. Die Maische kann zur Homogenisierung im Kreislauf (über den Wärmetauscher 5) umgepumpt werden oder zur Erwärmung im externen Wärmetauscher 5, das heißt der Wärmetauscher 5 muss nicht zwangsläufig mit Heizmedium versorgt werden. Es soll angemerkt werden das die Maische nicht zwangsläufig während des gesamten Maischprozesses aufgeheizt werden muss, die Maische kann für eine bestimmte Zeit bei einer bestimmten Temperatur verbleiben (dies nennt man "Rast). Die mittlere Vorlauftemperatur $T_V$ des Heizmediums 14 beträgt beispielsweise 65 °C bis 110 °C unter mittlerer Temperatur versteht man hier die mittlere Temperatur während des Maischprozesses eines Suds. Die Vorlauftemperatur ist die Temperatur mit der das Heizmedium 14 in die Innenheizung 3 einläuft oder aber falls der externe Wärmetauscher vorgeschaltet sein sollte in den externen Wärmetauscher 5 einläuft.

Der NTU-Wert des erfindungsgemäßen Systems liegt beispielsweise wie zuvor beschrieben in einem Bereich von 1 bis 3. Die mittlere Heizrate zum Aufheizen der Maische 13 liegt in einem Bereich von 0,5 bis 1,5 K/min und die mittlere Rücklauftemperatur $T_R$ des Heizmediums 14 nach Erwärmen der Maische, das heißt zum Beispiel in der Leitung 17d, 17e, 17g, 17f liegt bei 70 °C bis 85°C.

Das abgekühlte Heizmedium 14 wird dann, wie zuvor beschrieben entweder in den unteren Bereich des Energiespeichertanks 4 eingeleitet und /oder dem aus dem Energiespeichertank 4 abgezogenen Heizmedium 4 beispielsweise am Punkt 8 beigemischt, sodass sich die entsprechende Vorlauftemperatur $T_V$ zur Beheizung der Maische in Abhängigkeit der erforderlichen bzw. gewünschten Heizrate ergibt. Das kalte Heizmedium im Energiespeichertank 4 kann beispielsweise dann über die Leitung 18 beispielsweise in einem weiteren Wärmetauscher 7 aufgeheizt werden, beispielsweise rekuperativ durch den Würzekühler 7 oder auch andere Wärmequellen, bevorzugt rekuperative.

Dadurch, dass das abgekühlte Heizmedium 14 am Punkt 8 dem heißen Heizmedium beigemischt wird kann die logarithmische Temperaturdifferenz $\Delta\vartheta$) an der Innenheizung 3 und den externen Wärmetaucher 5 im Wesentlichen konstant bleiben. Durch die Auslegung des Systems mit einem großen NTU-Wert braucht ein in Reihe oder parallel geschaltetes zusätzliches Heizsystem zumeist keine eigens geregelte Vorlauftemperatur. Die Temperaturführung des gesamten Systems folgt der Produkttemperatur $T_p$, das heißt der Temperatur der Maische 13. Die Rücklauftemperatur des abgekühlten Heizmediums 14 verläuft somit während des gesamten Aufheizprozesses nahe an der Temperatur der Maische $T_P$. Somit kann das Heizmedium 14 mit thermischer Energie aus einer rekuperativen Wärmerückgewinnung aufgeheizt werden, insbesondere durch einen Würzekühler 7, wobei gleichzeitig hohe Heizraten realisiert werden können.

Wenn in diesem Dokument die Rede ist, dass das abgekühlte Heizmedium in den unteren Bereich des Energiespeichertanks eingelagert wird, so wird vorzugsweise eine temperaturabhängige Einlagerung verstanden, das heißt der Energiespeichertank kann über mehrere Einlässe, welche auf verschiedenen Höhenniveaus angeordnet sind oder über eine Schichtladelanze verfügen. So kann gewährleistet werden, dass das das Heizmedium gemäß seiner Temperatur eingelagert wird. Für eine rekuperative Aufheizung des Heizmediums 14 über beispielsweise einen Wärmetauscher 7 kann auch wenn in den Figuren 1 und 2 nicht dargestellt, eine Ausmischung der im Energiespeichertank temperaturabhängig eingelagerten Rückläufe sinnvoll oder notwendig sein Das heißt, dass das kalte Heizmedium 14 welches zum Beispiel über die Leitung 18 dem Wärmetauscher 7 zugeführt wird eine bestimmte Temperatur aufweist. Auch hierfür können die mehreren Einlässe als Auslässe verwendet werden oder auch zusätzliche Auslässe erforderlich sein.

Die Vorrichtung und das Verfahren wurden mit einem Energiespeichertank 4 beschrieben, das heißt das Heizmedium wird einem Tank entnommen und in denselben Tank abgekühlt wieder zurückgeführt.

Der Energiespeichertank kann jedoch auch mehrteilig sein, das heißt es können zum Beispiel zwei Tanks sein, welche miteinander verbunden sind. Der bzw. die Energiespeichertanks können über eine sehr breite Temperaturspreizung verfügen, diese kann beispielhaft von 2 °C bis 110 °C sein, bevorzugt verfügt ein Energiespeicher jedoch über ein Temperaturniveau von etwa 75 °C bis 95 °C oder bis 110 °C. Wenn das Heizmedium lediglich zwischen Energiequelle (zum Beispiel einem Würzekühler 7) und mindestens einem Wärmeverbraucher (zum Beispiel Maischgefäß, Läuterwürzeerhitzer) zirkuliert, spricht man von einem geschlossenen System, meist wird zwischen Energiequelle und Wärmeverbraucher ein Energiespeichertank als Puffergefäß geschalten. Es ist jedoch auch möglich, dass das Heizmedium aus einem Heißwassertank (welcher beispielhaft Wasser mit einer Temperatur von 78 °C bis 110 °C bevorratet) entnommen und einem Wärmeverbraucher als Heizmedium zugeführt wird und das abgekühlte Heizmedium in einen anderen Tank geleitet wird, beispielhaft einem Warmwassertank (welcher beispielhaft Wasser mit einer Temperatur von 70 °C bis 85 °C bevorratet). Auch in dieser Ausprägung kann das Heißwasser rekuperativ gewonnen werden, beispielhaft kann das Heißwasser bei der Würzekühlung aus Kaltwasser erzeugt werden und im Heißwassertank gepuffert werden. Das abgekühlte Heizmedium, welches in den Warmwassertank geleitet wird, kann beispielhaft im Brauprozess als Einmaisch- oder Anschwänzwasser oder zu Reinigungszwecken verwendet werden. In diesem Fall handelt es sich wie oben beschrieben um ein offenes System unter Verwendung von Produktwasser als Heizmedium. Da in einem geschlossenen System das Heizmedium im Gegensatz zu einem offenen System im Kreislauf zirkuliert und lediglich als Wärmeträgerfluid fungiert, kann es sich bei dem Heizmedium um Wasser handeln, jedoch auch um ein anderes Medium wie etwa einem Thermoöl. Wie erwähnt kann gemäß einer Ausführungsform der Erfindung das kalte Heizmedium im Energiespeichertank beispielsweise über einen weiteren Wärmetauscher aufgeheizt werden, beispielsweise rekuperativ durch den Würzekühler oder andere Wärmequellen, bevorzugt rekuperative. Wie bereits erwähnt kann gemäß einer weiteren Ausführungsform auch bei einem offenen System eine Aufheizung des Heizmediums erfolgen. Hier wird beispielsweise einem Würzekühler Kaltwasser zugeführt und das durch die Abkühlung der Würze erwärmte Wasser dem Heißwassertank zugeführt. Je nach Temperaturniveau der Energiequelle und der daraus abzuholenden Energie kann das Wasser von einer Kaltwasserquelle oder dem Warmwassertank stammen und das erwärmte Wasser wird dann je nach Temperaturniveau dem Warmwassertank oder dem Heißwassertank zugeführt.

Die erfindungsgemäße Lösung, zusätzlich zur Innenheizung 3 einen externen Wärmetauscher 5 zu verwenden, ermöglicht gemäß einem weiteren Ausführungsbeispiel als Heizmedium 14 für die Maischeinrichtung 1 Dampf zu verwenden. Der Dampf kann je nach Verschaltung erst der Innenheizung 3 und dann dem externen Wärmetauscher 5 zugeführt werden oder umgekehrt. Dies bringt z.B. den Vorteil mit sich, dass wenn die Wärmetauscher, d.h. die Innenheizung 3 und der externe Wärmetauscher 5 in Reihe geschaltet sind, der jeweils zweite Wärmetauscher die Maische über die Energie aus dem Kondensat beheizt, wobei das Kondensat immer noch um die 100 °C aufweisen kann. Unter Kondensat ist auch ein Kondensat - Dampfgemisch zu verstehen.

**Patentansprüche**

1. Maischvorrichtung (1) zum Erwärmen von Maische (13) bei der Bierherstellung mit einem Behälter (2), einer im Behälter (2) angeordneten Innenheizung (3) zum Beheizen der Maische mit einem Heizmedium (14) **dadurch gekennzeichnet, dass** die Maischvorrichtung (1) einen externen Wärmetauscher (5) zum Beheizen der Maische mit dem Heizmedium (14) aufweist.

2. Maischvorrichtung (1) nach Anspruch 1, **dadurch gekennzeichnet, dass** in Bezug auf das Heizmedium der externe Wärmetauscher (5) in Reihe zu der Innenheizung (3) geschaltet ist.

3. Maischvorrichtung (1) nach Anspruch 1 oder 2, **dadurch gekennzeichnet, dass** der Behälter (2) einen Auslass (15), insbesondere unteren Auslass (15) aufweist über den die Maische dem externen Wärmetauscher (5) zugeführt werden kann sowie einen Einlass (6), insbesondere tangentialen Einlass (6) über den im externen Wärmetauscher (5) erwärmte Maische erneut dem Behälter (2) zurückgeführt werden kann.

4. Maischvorrichtung (1) nach mindestens einem der Ansprüche 1-3, **dadurch gekennzeichnet, dass** entweder a) die Maischvorrichtung (1) mit einem Energiespeichertank (4) oder Verdrängungsspeicher verbunden ist, aus dem das Heizmedium (14) der Innenheizung (3) und dem externen Wärmetauscher (5) über Zuführleitungen (16a-16c) zugeführt werden kann und vorzugsweise abgekühltes Heizmedium (14) über Rückführleitungen (17a-17e, 17g) in den Energiespeichertank (4) oder Verdrängungsspeicher zurückgeführt werden kann, oder
b) die Maischvorrichtung (1) mit einem ersten Tank, insbesondere Heißwassertank, verbunden ist, aus dem das Heizmedium (14) der Innenheizung (3) und dem externen Wärmetauscher (5) über Zuführleitungen (16a-16c) zugeführt werden kann und vorzugsweise abgekühltes Heizmedium (14) über Rückführleitungen (17a-17e, 17g) in einen zweiten Tank, insbesondere Warmwassertank, zurückgeführt werden kann.

5. Maischvorrichtung (1) nach Anspruch 4, **dadurch gekennzeichnet, dass** im Fall a) der Energiespeichertank (4) oder Verdrängungsspeicher mit mindestens einem weiteren Wärmetauscher (7) verbunden ist, über den Heizmedium (14) aus dem Energiespeichertank (4) oder Verdrängungsspeicher erwärmt und erneut dem Energiespeichertank (4) oder Verdrängungsspeicher in einem darüberliegenden Bereich zurückgeführt werden kann oder im Fall b) der zweite Tank mit mindestens einem weiteren Wärmetauscher (7) verbunden ist, über den Heizmedium (14) aus dem zweiten Tank erwärmt und erneut dem ersten oder zweiten Tank zugeführt werden kann.

6. Maischvorrichtung (1) nach mindestens einem der Ansprüche 1-5 **dadurch gekennzeichnet, dass** rücklaufendes Heizmedium (14), das in der Innenheizung (3) und dem externen Wärmetauscher (5) abgekühlt wurde, dem heißen Heizmedium (14) zumischbar ist, insbesondere in eine Zulaufleitung (16a) zur Maischvorrichtung (1) beigemischt werden kann.

7. Maischvorrichtung (1) nach mindestens einem der Ansprüche 1-6, **dadurch gekennzeichnet, dass** die Heizfläche (19) der Innenheizung (3) eine Vielzahl zum Produkt gerichtete Unebenheiten aufweist, insbesondere eine Vielzahl von nebeneinander und übereinander angeordneten gewölbten Taschen, die miteinander in Verbindung stehen und durch die das Heizmedium (14) fließen kann.

8. Maischvorrichtung (1) nach mindestens einem der Ansprüche 1-7, **dadurch gekennzeichnet, dass** der NTU-Wert der Innenheizung (3) und des externen Wärmetauschers (5) zusammen größer 1 ist, insbesondere in einem Bereich von 1-3 liegt.

9. Verfahren zum Maischen, insbesondere mit einer Vorrichtung nach mindestens einem der Ansprüche 1-8 oder 13 oder 14, **dadurch gekennzeichnet, dass** ein Sud in einen Behälter (2) der Maischvorrichtung (1) eingelagert und in diesem Behälter (2) über eine Innenheizung (3) aufgeheizt wird, wobei die Maische (13) aus dem Behälter (2) in einen externen Wärmetauscher (5) geleitet, dort erwärmt und in die Maischvorrichtung (1) zurückgeführt wird.

10. Verfahren nach Anspruch 9, **dadurch gekennzeichnet, dass** die mittlere Heizrate zum Aufheizen der Maische (13) in einem Bereich von 0,5 bis 1,5 K/min liegt und die mittlere Rücklauftemperatur ($T_R$) des Heizmediums (14) nach Erwärmen der Maische (13) in einem Bereich von 70 °C bis 85 °C liegt und die mittlere Vorlauftemperatur ($T_V$) des Heizmediums (14) vor Erwärmen der Maische (13) in einem Bereich von 65 °C bis 110 °C, insbesondere 65 °C bis 98 °C liegt.

11. Verfahren nach Anspruch 9 oder 10, **dadurch gekennzeichnet, dass** das in der Innenheizung (3) und dem externen Wärmetauscher (5) abgekühlte Heizmedium (14) dem heißen Heizmedium (14), insbesondere in eine Zulaufleitung (16a) beigemischt wird, insbesondere derart, dass die Temperaturdifferenz zwischen der Vorlauftemperatur ($T_V$) des Heizmediums und der Produkttemperatur ($T_p$) im Wesentlichen konstant ist oder insbesondere die

logarithmische Temperaturdifferenz $\Delta\vartheta$ an der Innenheizung (3) und dem externen Wärmetauscher (5) während des Maischprozesses im Wesentlichen konstant ist.

12. Verfahren nach mindestens einem der Ansprüche 9-11, **dadurch gekennzeichnet, dass** das Heizmedium (14) mit thermischer Energie die aus einer rekuperativen Wärmerückgewinnung aufgeheizt wird, insbesondere durch einen Würzekühler (7).

13. Maischvorrichtung nach mindestens Anspruch 5, **dadurch gekennzeichnet, dass** der weitere Wärmetauscher ein Würzekühler (7) ist.

14. Maischvorrichtung nach mindestens einem der Ansprüche 1-8 oder 13, **dadurch gekennzeichnet, dass** das Heizmedium (14) zum Erwärmen der Maische über mindestens eine der folgenden Energiequellen aufgeheizt wird: Würzekühler (7), Blockheizkraftwerk, Wärmepumpe, Pfannendunstkondensator, vorzugsweise über mindestens einen Würzekühler (7).

15. Maischvorrichtung nach mindestens einem der Ansprüche 1-8 oder 13-14, **dadurch gekennzeichnet, dass** der externe Wärmetauscher (5) eine Heizfläche außerhalb der Maischvorrichtung (1) aufweist.

FIG. 1

EP 4 553 139 A1

FIG. 2

Europäisches Patentamt

European Patent Office

Office européen des brevets

## EUROPÄISCHER RECHERCHENBERICHT

Nummer der Anmeldung

EP 24 20 7097

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 055146 A1 (BRAUKON GMBH [DE]; PFISTER STEFAN [DE]) 8. Mai 2013 (2013-05-08) | 1-6,8-15 | INV. C12C7/06 C12C7/22 |
| Y | * Absätze [0027], [0030], [0033], [0036]; Abbildung 1 * | 7 | C12C7/26 F28D20/00 |
| | - - - - - | | |
| X | DE 20 2013 003048 U1 (GEA BREWERY SYSTEMS GMBH [DE]) 17. Juni 2013 (2013-06-17) | 1,4-6,14 | |
| Y | * Absätze [0025], [0026]; Abbildung 1 * | 7 | |
| | - - - - - | | |
| Y | EP 2 624 945 B1 (KRONES AG [DE]) 27. September 2017 (2017-09-27) * Absätze [0035], [0036]; Abbildungen 3,4 * | 7 | |
| | - - - - - | | |
| A | US 2015/275159 A1 (KAMMERLOHER HELMUT [DE]) 1. Oktober 2015 (2015-10-01) * Absätze [0057] - [0059] * | 1-15 | |
| | - - - - - | | |
| A | US 2013/000863 A1 (KAMMERLOHER HELMUT [DE]) 3. Januar 2013 (2013-01-03) * Absätze [0018], [0049], [0050] * | 1-15 | RECHERCHIERTE SACHGEBIETE (IPC) |
| | - - - - - | | C12C |
| A | EP 0 611 819 A2 (LENZ BERNHARD [DE]; LENZ AUGUST [DE]) 24. August 1994 (1994-08-24) * Spalte 5, Zeilen 4-12,40-51; Abbildung 1 * | 1-15 | F28F F28D |
| | - - - - - | | |

Der vorliegende Recherchenbericht wurde für alle Patentansprüche erstellt

| Recherchenort | Abschlußdatum der Recherche | Prüfer |
|---|---|---|
| Den Haag | 6. Februar 2025 | Galleiske, Anke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 7097

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2025

| Im Recherchenbericht angeführtes Patentdokument | Datum der Veröffentlichung | Mitglied(er) der Patentfamilie | Datum der Veröffentlichung |
|---|---|---|---|
| DE 102011055146 A1 | 08-05-2013 | KEINE | |
| DE 202013003048 U1 | 17-06-2013 | KEINE | |
| EP 2624945 B1 | 27-09-2017 | BR 112013008002 A2 | 14-06-2016 |
| | | CN 103228348 A | 31-07-2013 |
| | | DE 102010041954 A1 | 05-04-2012 |
| | | DK 2624945 T3 | 02-01-2018 |
| | | EP 2624945 A1 | 14-08-2013 |
| | | WO 2012045441 A1 | 12-04-2012 |
| US 2015275159 A1 | 01-10-2015 | BR 112015010141 A2 | 11-07-2017 |
| | | CA 2889156 A1 | 15-05-2014 |
| | | CN 104812884 A | 29-07-2015 |
| | | DE 102012220581 A1 | 15-05-2014 |
| | | DK 2809766 T3 | 13-06-2016 |
| | | EP 2809766 A1 | 10-12-2014 |
| | | JP 6304717 B2 | 04-04-2018 |
| | | JP 2015534827 A | 07-12-2015 |
| | | US 2015275159 A1 | 01-10-2015 |
| | | WO 2014072329 A1 | 15-05-2014 |
| | | ZA 201503044 B | 27-01-2016 |
| US 2013000863 A1 | 03-01-2013 | BR 112012015389 A2 | 12-12-2017 |
| | | CA 2784812 A1 | 30-06-2011 |
| | | CN 102791846 A | 21-11-2012 |
| | | DE 102009055300 A1 | 30-06-2011 |
| | | DK 2516614 T3 | 13-04-2015 |
| | | EP 2516614 A1 | 31-10-2012 |
| | | ES 2530452 T3 | 03-03-2015 |
| | | JP 5761619 B2 | 12-08-2015 |
| | | JP 2013515466 A | 09-05-2013 |
| | | US 2013000863 A1 | 03-01-2013 |
| | | WO 2011076410 A1 | 30-06-2011 |
| | | ZA 201204526 B | 25-09-2013 |
| EP 0611819 A2 | 24-08-1994 | DE 4304975 C1 | 03-03-1994 |
| | | EP 0611819 A2 | 24-08-1994 |
| | | JP H0795872 A | 11-04-1995 |

EPO FORM P0461

Für nähere Einzelheiten zu diesem Anhang : siehe Amtsblatt des Europäischen Patentamts, Nr.12/82